# EUROPEAN PATENT APPLICATION

(11) **EP 4 389 514 A1**
(43) Date of publication of application: **26.06.2024**
(21) Application number: 22215719.0
(22) Date of filing: 21.12.2022
(51) Int. Cl.: B60N 2/06, B60N 2/08, B60N 2/42, B60N 2/90, B60N 2/22, B60N 2/23

(54) **LINEAR LOCKING MECHANISM, VEHICLE COMPONENT COMPRISING A LINEAR LOCKING MECHANISM, AND METHOD FOR OPERATING A LINEAR LOCKING MECHANISM**

(71) Applicant: Ningbo Geely Automobile Research & Development Co. Ltd., Hangzhou Bay New District Ningbo 315336 (CN); Zhejiang Geely Holding Group Co., Ltd., Hangzhou, Zhejiang 310051 (CN)
(72) Inventor: JONSSON, Tony, 44191 ALINGSÅS (SE)
(74) Representative: Zacco Sweden AB

(57) **Abstract**

A linear locking mechanism for stepless locking of an elongated first member having an extension in a longitudinal direction to a second member. The first member is releasably connected to the second member and linearly movable relative to the second member in a longitudinal first direction and a longitudinal second direction opposite the longitudinal first direction. The linear locking mechanism comprises a first locking arrangement. The first locking arrangement comprises a first locking member and a second locking member arranged around an outer surface of the first member and in connection to the second member. The first locking member is applying a first locking force onto the first member preventing movement of the first member relative to the second member in the longitudinal first direction. The second locking member is applying a second locking force onto the first member preventing movement of the first member relative to the second member in the longitudinal second direction. The first locking member is biased by a first spring in the longitudinal first direction into a first inclined position. The second locking member is biased by a second spring in the longitudinal second direction into a second inclined position.

## Description

### TECHNICAL FIELD

The present disclosure relates to a linear locking mechanism for stepless locking of an elongated first member having an extension in a longitudinal direction to a second member. The first member is releasably connected to the second member and linearly movable relative to the second member in a longitudinal first direction and a longitudinal second direction opposite the longitudinal first direction. The disclosure further relates to a vehicle component comprising a linear locking mechanism, and a method for operating a linear locking mechanism.

### BACKGROUND

Linear locking mechanisms for stepless locking of an elongated first member to a second member are used in many different application areas, where there is a need for adjusting two components relative to each other and locking the two component to each other when adjusted. In vehicle applications, linear locking mechanisms may for example be used for adjusting and locking a vehicle seat to a rail structure, or arranged as a part of a vehicle seat structure for adjusting and locking of seat parts relative to each other. The locking configuration is preventing relative translational movement of the parts.

The stepless locking is enabling an efficient locking functionality without the need for locking grooves or similar arrangements. Traditionally, linear locking mechanisms of this kind are complex in construction, and there is a need for more simple constructions suitable for different vehicle applications.

### SUMMARY

An object of the present disclosure is to provide a linear locking mechanism, a vehicle component comprising a linear locking mechanism, and a method for operating a linear locking mechanism, where the previously mentioned problems are avoided. This object is at least partly achieved by the features of the independent claims. The dependent claims contain further developments of the linear locking mechanism and the vehicle component.

The disclosure concerns a linear locking mechanism for stepless locking of an elongated first member having an extension in a longitudinal direction to a second member. The first member is releasably connected to the second member and linearly movable relative to the second member in a longitudinal first direction and a longitudinal second direction opposite the longitudinal first direction. The linear locking mechanism comprises a first locking arrangement. The first locking arrangement comprises a first locking member and a second locking member arranged around an outer surface of the first member and in connection to the second member. The first locking member is configured for applying a first locking force onto the first member preventing movement of the first member relative to the second member in the longitudinal first direction. The second locking member is configured for applying a second locking force onto the first member preventing movement of the first member relative to the second member in the longitudinal second direction. The first locking member is biased by a first spring in the longitudinal first direction into a first inclined position relative to the extension of the first member in the longitudinal direction for establishing the first locking force. The second locking member is biased by a second spring in the longitudinal second direction into a second inclined position relative to the extension of the first member in the longitudinal direction for establishing the second locking force.

Advantages with these features are that the linear locking mechanism can be made simple and efficient in construction through the design with the first locking member and the second locking member. The locking members are enabling an efficient stepless locking of the first member to the second member, and is preventing relative translational movement between the members when locked. The two locking forces are securing that the first member is locked in opposite longitudinal directions relative to the second member. The stepless locking prevents the two members from being incorrectly secured to each other in a half-locked state, such as a state between two steps. In such a half-locked state, a load applied to the two members may cause them to disconnect from each other in an uncontrolled manner.

In one embodiment, the first locking member comprises a first opening defined by a first inner edge surface through which the first member is extending. The first inner edge surface is configured for applying the first locking force upon frictional engagement between the first inner edge surface and the outer surface of the first member. The second locking member comprises a second opening defined by a second inner edge surface through which the first member is extending. The second inner edge surface is configured for applying the second locking force upon frictional engagement between the second inner edge surface and the outer surface of the first member. The edge surfaces are used for efficiently gripping the first member for applying the locking forces.

In one embodiment, the linear locking mechanism comprises a first support structure arranged around the first member. The first support structure is arranged in contact with the first locking member. The linear locking mechanism comprises a second support structure arranged around the first member. The second support structure is arranged in contact with the second locking member. The support structures are supporting the locking functionality of the first locking member and the second locking member respectively for an efficient locking of the first member to the second member.

In one embodiment, the first support structure comprises a first abutment member arranged in contact with a first outer edge of the first locking member, where the first abutment member is configured for positioning the first locking member into the first inclined position relative to the extension of the first member in the longitudinal direction when biased by the first spring in the longitudinal first direction. The second support structure comprises a second abutment member arranged in contact with a second outer edge of the second locking member, where the second abutment member is configured for positioning the second locking member into the second inclined position relative to the extension of the first member in the longitudinal direction when biased by the second spring in the longitudinal second direction. The abutment members are enabling the inclined positions of the first locking member and the second locking member for a strong gripping action between the respective locking members and the first member, preventing movement of the first member relative to the second member.

In one embodiment, the linear locking mechanism further comprises a second locking arrangement. The second locking arrangement comprises an outer locking member arranged around the first member, and one or more inner locking members arranged at least partly inside the outer locking member and in connection to the first member. The one or more inner locking members are movably arranged relative to the first member and the outer locking member in the longitudinal direction. The one or more inner locking members are configured for applying a third locking force onto the first member preventing movement of the first member relative to the second member in the longitudinal first direction and in the longitudinal second direction. With this configuration, the linear locking mechanism has a two-part locking arrangement where the first locking arrangement is providing an initial locking force and the second locking arrangement is providing a high-load locking force. This is suitable in constructions when there is a need for higher locking forces. The first locking arrangement and the second locking arrangement are efficiently cooperating for establishing the locking forces preventing movement of the first member relative to the second member.

In one embodiment, the one or more inner locking members are configured for applying the third locking force onto the first member preventing movement of the first member relative to the second member in the longitudinal first direction and in the longitudinal second direction, upon a relative movement of the outer locking member in the longitudinal direction towards the one or more inner locking members and/or upon a relative movement of the one or more inner locking members in the longitudinal direction towards the outer locking member.

In one embodiment, upon a relative movement of the outer locking member in the longitudinal direction towards the one or more inner locking members, and/or upon a relative movement of the one or more inner locking members in the longitudinal direction towards the outer locking member, the one or more inner locking members are configured for being pushed towards the outer surface of the first member for applying the third locking force by means of frictional engagement between the one or more inner locking members and the outer surface of the first member.

In one embodiment, the outer locking member has a frustoconical inner surface. The one or more inner locking members each has an inner surface arranged in contact with the outer surface of the first member and an inclined outer surface arranged in contact with the inner surface of the outer locking member. The inner surfaces of the one or more inner locking members are configured for applying the third locking force by means of frictional engagement between the inner surfaces of the one or more inner locking members and the outer surface of the first member. The interaction between the frustoconical inner surface of the outer locking member and the inclined outer surfaces of the one or more inner locking members is pushing the one or more inner locking members towards the first member upon the relative movement of the outer locking member and the one or more inner locking members towards each other.

In one embodiment, the first support structure is movably arranged relative to the first member. Upon application of the first locking force onto the first member, the first locking member is configured for pushing the first support structure and the one or more inner locking members in the longitudinal first direction towards the outer locking member for applying the third locking force onto the first member; or upon application of the first locking force onto the first member, the first locking member is configured for pushing the first support structure and the outer locking member in the longitudinal first direction towards the one or more inner locking members for applying the third locking force onto the first member. The movable arrangement of the first support structure is enabling the cooperation between the first locking arrangement and the second locking arrangement, where the first locking arrangement and the second locking arrangement are efficiently cooperating for establishing the locking forces preventing movement of the first member relative to the second member.

In one embodiment, the second support structure is movably arranged relative to the first member. Upon application of the second locking force onto the first member, the second locking member is configured for pushing the second support structure and the outer locking member in the longitudinal second direction towards the one or more inner locking members for applying the third locking force onto the first member; or upon application of the second locking force onto the first member, the second locking member is configured for pushing the second support structure and the one or more inner locking members in the longitudinal second direction towards the outer locking member for applying the third locking force onto the first member. The movable arrangement of the second support structure is enabling the cooperation between the first locking arrangement and the second locking arrangement, where the first locking arrangement and the second locking arrangement are efficiently cooperating for establishing the locking forces preventing movement of the first member relative to the second member.

In one embodiment, the second locking arrangement comprises a third spring arranged between the outer locking member and the one or more inner locking members. The outer locking member and the one or more inner locking members are configured for being biased away from each other in the longitudinal direction by means of the third spring. The third spring is enabling a non-locked position of the second locking arrangement when no forces are applied.

In one embodiment, the first locking arrangement is arranged in a housing structure connected to the second member, and/or the first locking arrangement and the second locking arrangement are arranged in a housing structure connected to the second member.

In embodiments, the linear locking mechanism further comprises an unlocking mechanism. The unlocking mechanism is configured for unlocking the first locking arrangement enabling linear movement of the first member relative to the second member by releasing the first locking force and the second locking force. Alternatively, the unlocking mechanism is configured for unlocking the first locking arrangement and the second locking arrangement enabling linear movement of first member relative to the second member by releasing the first locking force, the second locking force, and the third locking force.

The disclosure further concerns a vehicle component comprising the linear locking mechanism described above.

In embodiments, the vehicle component is a vehicle seat rail structure, or the vehicle component is a vehicle seat structure.

The disclosure further concerns a method for operating a linear locking mechanism as described above. The method comprises the steps: applying a first locking force onto the first member by means of the first locking member for preventing movement of the first member relative to the second member in the longitudinal first direction, where the first locking member is biased by a first spring in the longitudinal first direction into a first inclined position relative to the extension of the first member in the longitudinal direction for establishing the first locking force; applying a second locking force onto the first member by means of the second locking member for preventing movement of the first member relative to the second member in the longitudinal second direction, where the second locking member is biased by a second spring in the longitudinal second direction into a second inclined position relative to the extension of the first member in the longitudinal direction for establishing the second locking force.

Advantages with the method are that the linear locking mechanism can be made simple and efficient in construction through the design with the first locking member and the second locking member. The locking members are enabling an efficient stepless locking of the first member to the second member, and is preventing relative translational movement between the members when locked. The two locking forces are securing that the first member is locked in opposite longitudinal directions relative to the second member. The stepless locking prevents the two members from being incorrectly secured to each other in a half-locked state, such as a state between two steps. In such a half-locked state, a load applied to the two members may cause them to disconnect from each other in an uncontrolled manner.

### BRIEF DESCRIPTION OF DRAWINGS

The disclosure will be described in detail in the following, with reference to the attached drawings, in which
- Fig. 1: shows schematically, in a side view, a vehicle comprising a linear locking mechanism,
- Fig. 2: shows schematically, in a perspective view, an exemplified configurational design of the linear locking mechanism, according to the disclosure,
- Fig. 3: shows schematically, in a cross-sectional view, an embodiment of the linear locking mechanism comprising a first locking arrangement, according to the disclosure,
- Fig. 4: shows schematically, in a perspective view, components of the first locking arrangement, according to the disclosure,
- Fig. 5a-b: show schematically, in side views, the linear locking mechanism with components of the first locking arrangement in different operational states, according to the disclosure,
- Fig. 6: shows schematically, in a cross-sectional view, an alternative embodiment of the linear locking mechanism comprising a first locking arrangement and a second locking arrangement, according to the disclosure,
- Fig. 7a-c: show schematically, in side views, the alternative embodiment of the linear locking mechanism with components of the first locking arrangement and the second locking arrangement in different operational states, according to the disclosure,
- Fig. 8a-b: show schematically, in a perspective view and in a rear view, components of the second locking arrangement, according to the disclosure, and
- Fig. 9: shows schematically, in a cross-sectional view, a further alternative embodiment of the linear locking mechanism comprising a first locking arrangement and a second locking arrangement, according to the disclosure.

### DESCRIPTION OF EXAMPLE EMBODIMENTS

Various aspects of the disclosure will hereinafter be described in conjunction with the appended drawings to illustrate and not to limit the disclosure, wherein like designations denote like elements, and variations of the described aspects are not restricted to the specifically shown embodiments, but are applicable on other variations of the disclosure.

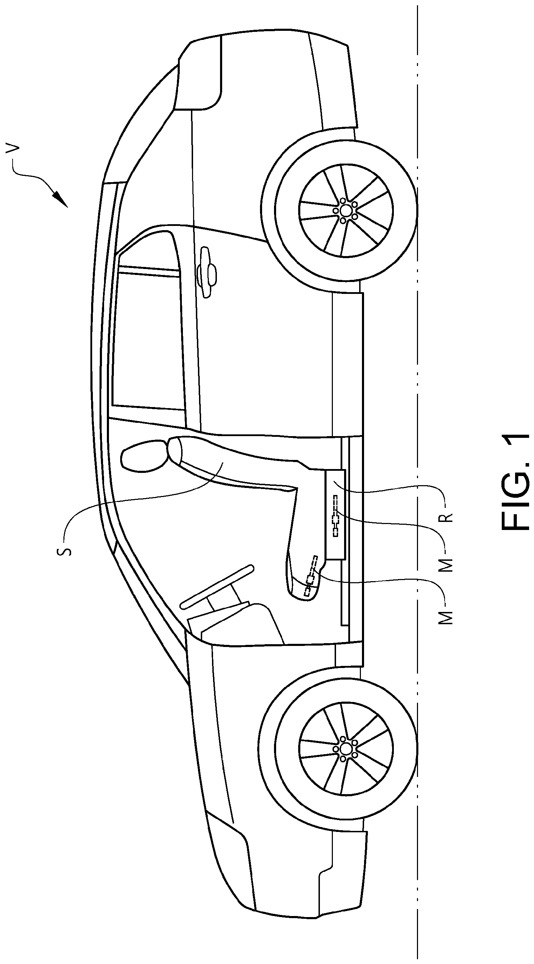

Figure 1 schematically shows a vehicle V having a vehicle component comprising a linear locking mechanism M for stepless locking of an elongated first member 1 to a second member 2. In the exemplified embodiment, the linear locking mechanism M may be arranged in a vehicle seat rail structure R for stepless length adjustment and locking of a vehicle seat structure S relative to a vehicle floor, and/or the linear locking mechanism M may be arranged in the vehicle seat structure S for stepless adjustment and locking of seat parts relative to each other. The locking configuration of the linear locking mechanism M is preventing relative translational movement of parts involved. It should be understood that the linear locking mechanism as further described could be used in any suitable vehicle application for efficient adjustment and locking of two structural parts relative to each other.

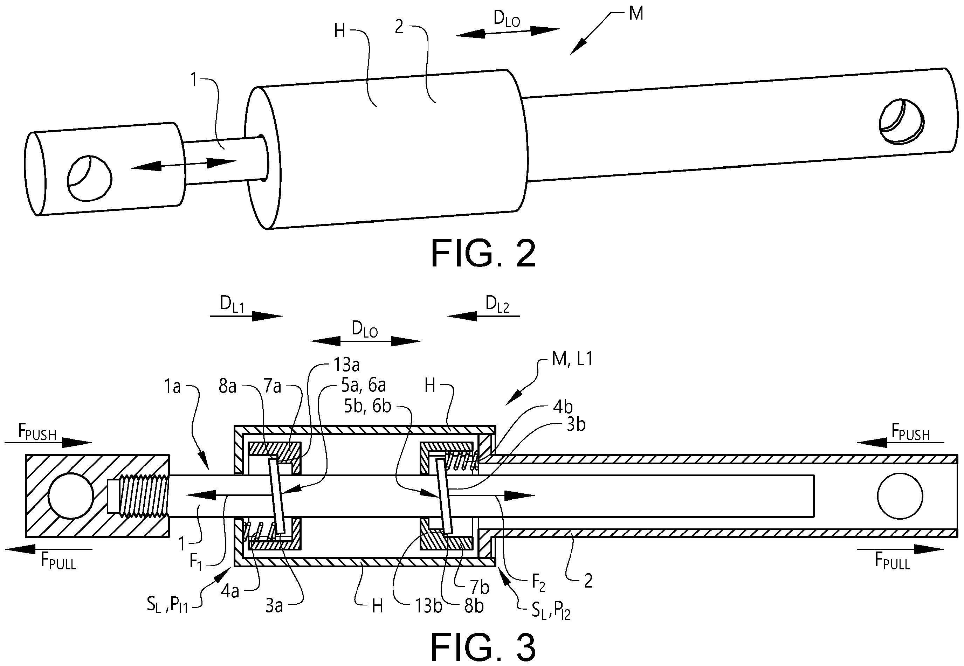

In the following, different embodiments of the linear locking mechanism M will be described, and the different embodiments may have the exterior configuration shown in figure 2. The linear locking mechanism M comprises an elongated first member 1 that is connected to a second member 2. The elongated first member 1 has an extension in a longitudinal direction D_{LO}. The first member 1 is releasably connected to the second member 2 and linearly movable relative to the second member 2, in opposite longitudinal directions, as illustrated with the double arrow. The second member 2 comprises a housing structure H that is surrounding one or more locking arrangements of the linear locking mechanism M. The one or more locking arrangements are used for preventing relative translational movement of the first member 1 and the second member 2 relative to each other. The first member 1 may be arranged as an elongated rod-like structure having a main extension in the longitudinal direction D_{LO}. The second member 2 may be arranged as a cylinder-like structure that is encompassing the first member 1. The first member 1 and the second member 2 may for example be configured as a coaxially arranged rod and cylinder pair.

In figures 3, 4, and 5a-b, a first embodiment of a linear locking mechanism M for stepless locking of an elongated first member 1 to a second member 2 is schematically shown. As shown in the figures, the elongated first member 1 has an extension in a longitudinal direction D_{LO}. The first member 1 is releasably connected to the second member 2 and linearly movable relative to the second member 2 in a longitudinal first direction D_{L1} and a longitudinal second direction D_{L2} opposite the longitudinal first direction D_{L1}, as will be further described below.

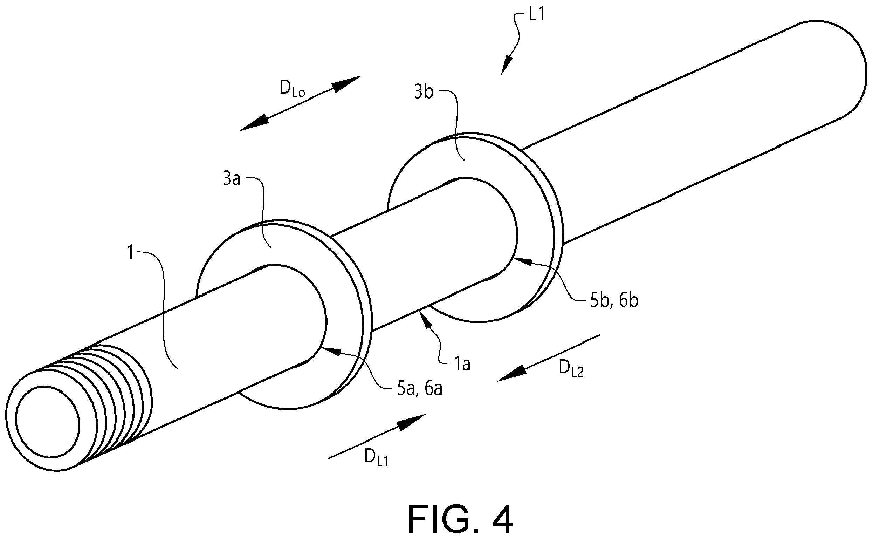

In the embodiment shown in figures 3, 4, and 5a-b, the linear locking mechanism M comprises a first locking arrangement L1. The first locking arrangement L1 is arranged for preventing movement of the first member 1 relative to the second member 2 in the longitudinal first direction D_{L1} and longitudinal second direction D_{L2}. The first locking arrangement L1 comprises a first locking member 3a and a second locking member 3b arranged around an outer surface 1a of the first member 1, as shown in figure 4. The first locking member 3a and the second locking member 3b are arranged in connection to the second member 2 for establishing the locking forces between the first member and the second member 2. In the shown embodiment, the first locking arrangement L1 is arranged in a housing structure H connected to the second member 2.

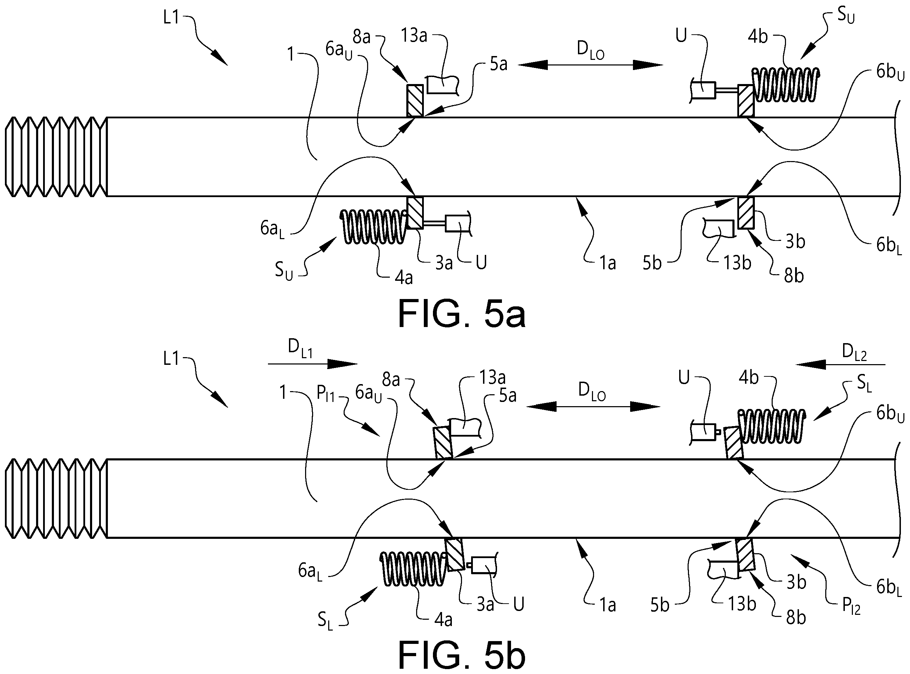

The first locking member 3a is in a locked state S_{L} configured for applying a first locking force F₁ onto the first member 1 for preventing movement of the first member 1 relative to the second member 2 in the longitudinal first direction D_{L1}, as indicated with an arrow in figure 3. The first locking force F₁ is counteracting a movement of the first member 1 in the longitudinal first direction D_{L1} relative to the second member 2 by means of the first locking member 3a. The locked state S_{L} is schematically shown in figures 3 and 5b.

The first locking member 3a comprises a first opening 5a defined by a first inner edge surface 6a through which the first member 1 is extending. The first opening 5a is suitably slightly larger than the cross-sectional dimension of the first member 1. The first inner edge surface 6a is applying the first locking force F₁ upon frictional engagement between the first inner edge surface 6a and the outer surface 1a of the first member 1. In the shown embodiment, the first locking member 3a is arranged as an annular structural element extending around the outer surface 1a of the first member 1, and suitably the first locking member 3a has a washer-like configuration. The first locking member 3b is made of a strong material that can interact with the outer surface 1a of the first member 1 for applying the first locking force F₁ for preventing movement of the first member 1 in the longitudinal first direction D_{L1}.

In the locked state S_{L}, the first locking member 3a is arranged in a first inclined position P_{I1} relative to the extension of the first member 1 in the longitudinal direction D_{LO} for establishing the first locking force F₁, as shown in figures 3 and 5b. The first inclined position P_{I1} of the first locking member 3a is used for a gripping action between the first locking member 3a and the first member 1 that is preventing movement of the first member 1 relative to the second member 2 in the longitudinal first direction D_{L1}.

In the position of the linear locking mechanism M illustrated in figures 3 and 5b, at least a first upper section 6a_{U} of the first inner edge surface 6a is arranged in contact with the outer surface 1a of the first member 1 due to the first inclined position P_{I1} of the first locking member 3a. Similarly, at least a first lower section 6a_{L} of the first inner edge surface 6a is arranged in contact with the outer surface 1a of the first member 1 due to the first inclined position P_{I1} of the first locking member 3a. The engagement between the first upper section 6au and the outer surface 1a of the first member 1, and the engagement between the first lower section 6a_{L} and the outer surface 1a of the first member 1, are establishing the first locking force F₁ when a pushing force F_{PUSH} in the longitudinal direction D_{LO} on the first member 1 and/or a pushing force F_{PUSH} in the longitudinal direction D_{LO} on the second member 2 is trying to displace the first member 1 relative to the second member 2 in the longitudinal first direction D_{L1}. It should be understood that the expressions upper and lower are referring to the positioning of the linear locking mechanism M shown in figures 3 and 5b, and used for clarifying the details of the linear locking mechanism M.

To enable the first inclined position P_{I1} of the first locking member 3a, the first locking member 3a is biased by a first spring 4a in the longitudinal first direction D_{L1} into the first inclined position P_{I1} relative to the extension of the first member 1 in the longitudinal direction D_{LO} for establishing the first locking force F₁, as shown in figures 3 and 5b. The first spring 4a is in this way used for pushing the first locking member 3a into the first inclined position P_{I1} by a spring force from the first spring 4a acting on a part of the first locking member 3a. In the illustrated position of the linear locking mechanism M, the first spring 4a is acting on a lower part of the first locking member 3a.

The linear locking mechanism M comprises a first support structure 7a arranged at least partly around the first member 1, as understood from figure 3. The first support structure 7a is arranged in contact with the first locking member 3a, and used for positioning the first locking member 3a into the first inclined position P_{I1}. The first support structure 7a is preventing movement of the first locking member 3a in the longitudinal direction D_{LO} along the first member 1 when the spring action from the first spring 4a is acting on the first locking member 3a. In this embodiment, the first support structure 7a is suitably stationary arranged relative to the second member 2, and connected to the second member 2, for an efficient locking between the first member 1 and the second member 2.

The first support structure 7a comprises a first abutment member 13a arranged in contact with a first outer edge 8a of the first locking member 3a, as shown in figures 3 and 5b. The first abutment member 13a is suitably arranged as a protruding structural part of the first support structure 7a. The first abutment member 13a is positioning the first locking member 3a into the first inclined position P_{I1} relative to the extension of the first member 1 in the longitudinal direction D_{LO} when biased by the first spring 4a in the longitudinal first direction D_{L1}. In the illustrated position of the linear locking mechanism M, the first abutment member 13a is arranged in contact with the first outer edge 8a of the first locking member 3a at an upper part of the first locking member 3a, for enabling the first inclined position P_{I1} of the first locking member 3a. The first abutment member 13a is arranged on an opposite longitudinal side of the first locking member 3a compared to the first spring 4a, as understood from the figures, in order to establish the first inclined position P_{I1} of the first locking member 3a.

It should be understood that the first spring 4a and the first abutment member 13a may be positioned in other suitable ways different from the one illustrated, as long as the first locking member 3a in the locked state S_{L} is applying the first locking force F₁ onto the first member 1 for preventing movement of the first member 1 relative to the second member 2 in the longitudinal first direction D_{L1}. The first spring 4a may instead be positioned at and acting on an upper part of the first locking member 3a, and the first abutment member 13a may then instead be positioned at and arranged in contact with the first locking member 3a at a lower part of the first locking member 3a.

When a pushing force F_{PUSH} acting on the first member 1 and/or the second member 2, is trying to displace the first member 1 relative to the second member 2 in the longitudinal first direction D_{L1} in the locked state S_{L} of the first locking member 3a, frictional engagement between the first locking member 3a and the first member 1 is preventing such displacement, as described above. The first inclined position P_{I1} of the first locking member 3a, established by the spring action from the first spring 4a and the counteraction from the first abutment member 13a are securing this frictional engagement.

If instead a pulling force F_{PULL} acting on the first member 1 and/or the second member 2, is trying to displace the first member 1 relative to the second member 2 in the longitudinal second direction D_{L2} in the locked state S_{L} of the first locking member 3a, frictional engagement between the first locking member 3a and the first member 1 will depending on the applied pulling force F_{PULL} counteract the spring force applied by the first spring 4a. It is thus in this way possible to bias the first locking member 3a away from the first inclined position P_{I1}, where theoretically the first member 1 could be displaced relative to the second member 2 in the longitudinal second direction D_{L2}. However, the second locking member 3b is used for preventing such displacement.

The second locking member 3b is in a locked state S_{L} configured for applying a second locking force F₂ onto the first member 1 preventing movement of the first member 1 relative to the second member 2 in the longitudinal second direction D_{L2}, as indicated with an arrow in figure 3. The second locking force F₂ is counteracting a movement of the first member 1 in the longitudinal second direction D_{L2} relative to the second member 2 by means of the second locking member 3b. The locked state S_{L} is schematically shown in figures 3 and 5b.

The second locking member 3b comprises a second opening 5b defined by a second inner edge surface 6b through which the first member 1 is extending. The second opening 5b is suitably slightly larger than the cross-sectional dimension of the first member 1. The second inner edge surface 6b is applying the second locking force F₂ upon frictional engagement between the second inner edge surface 6b and the outer surface 1a of the first member 1. In the shown embodiment, the second locking member 3b is arranged as an annular structural element extending around the outer surface 1a of the first member 1, and suitably the second locking member 3b has a washer-like configuration. The second locking member 3b is made of a strong material that can interact with the outer surface 1a of the first member 1 for applying the second locking force F₂ for preventing movement of the first member 1 in the longitudinal second direction D_{L2}.

In the locked state S_{L}, the second locking member 3b is arranged in a second inclined position P_{I2} relative to the extension of the first member 1 in the longitudinal direction D_{LO} for establishing the second locking force F₂, as shown in figures 3 and 5b. The second inclined position P_{I2} of the second locking member 3b is used for a gripping action between the second locking member 3b and the first member 1 that is preventing movement of the first member 1 relative to the second member 2 in the longitudinal second direction D_{L2}.

In the position of the linear locking mechanism M illustrated in figures 3 and 5b, at least a second upper section 6b_{U} of the second inner edge surface 6b is arranged in contact with the outer surface 1a of the first member 1 due to the second inclined position P_{I2} of the second locking member 3b. Similarly, at least a second lower section 6b_{L} of the second inner edge surface 6b is arranged in contact with the outer surface 1a of the first member 1 due to the second inclined position P_{I2} of the second locking member 3b. The engagement between the second upper section 6bu and the outer surface 1a of the first member 1, and the engagement between the second lower section 6b_{L} and the outer surface 1a of the first member 1, are establishing the second locking force F₂ when a pulling force F_{PULL} in the longitudinal direction D_{LO} on the first member 1 and/or a pulling force F_{PULL} in the longitudinal direction D_{LO} on the second member 2 is trying to displace the first member 1 relative to the second member 2 in the longitudinal second direction D_{L2}. It should be understood that the expressions upper and lower are referring to the positioning of the linear locking mechanism M shown in figures 3 and 5b, and used for clarifying the details of the linear locking mechanism M.

To enable the second inclined position P_{I2} of the second locking member 3b, the second locking member 3b is biased by a second spring 4b in the longitudinal second direction D_{L2} into the second inclined position P_{I2} relative to the extension of the first member 1 in the longitudinal direction D_{LO} for establishing the second locking force F₂ as shown in figures 3 and 5b. The second spring 4b is in this way used for pushing the second locking member 3b into the second inclined position P_{I2} by a spring force from the second spring 4b acting on a part of the second locking member 3b. In the illustrated position of the linear locking mechanism M, the second spring 4b is acting on an upper part of the second locking member 3b.

The linear locking mechanism M comprises a second support structure 7b arranged at least partly around the first member 1, as understood from figure 3. The second support structure 7b is arranged in contact with the second locking member 3b, and used for positioning the second locking member 3b into the second inclined position P_{I2}. The second support structure 7b is preventing movement of the second locking member 3b in the longitudinal direction D_{LO} along the first member 1 when the spring action from the second spring 4b is acting on the second locking member 3b. In this embodiment, the second support structure 7b is suitably stationary arranged relative to the second member 2, and connected to the second member 2, for an efficient locking between the first member 1 and the second member 2.

The second support structure 7b comprises a second abutment member 13b arranged in contact with a second outer edge 8b of the second locking member 3b, as shown in figures 3 and 5b. The second abutment member 13b is suitably arranged as a protruding structural part of the second support structure 7b. The second abutment member 13b is positioning the second locking member 3b into the second inclined position P_{I2} relative to the extension of the first member 1 in the longitudinal direction D_{LO} when biased by the second spring 4b in the longitudinal second direction D_{L2}. In the illustrated position of the linear locking mechanism M, the second abutment member 13b is arranged in contact with the second outer edge 8b of the second locking member 3b at a lower part of the second locking member 3b, for enabling the second inclined position P_{I2} of the second locking member 3b. The second abutment member 13b is arranged on an opposite longitudinal side of the second locking member 3b compared to the second spring 4b, as understood from the figures, in order to establish the second inclined position P_{I2} of the second locking member 3a.

It should be understood that the second spring 4b and the second abutment member 13b may be positioned in other suitable ways different from the one illustrated, as long as the second locking member 3b in the locked state S_{L} is applying the second locking force F₂ onto the first member 1 for preventing movement of the first member 1 relative to the second member 2 in the longitudinal second direction D_{L2}. The second spring 4b may instead be positioned at and acting on a lower part of the second locking member 3b, and the second abutment member 13b may then instead be positioned at and arranged in contact with the second locking member 3b at an upper part of the second locking member 3b.

When a pulling force F_{PULL} acting on the first member 1 and/or the second member 2, is trying to displace the first member 1 relative to the second member 2 in the longitudinal second direction D_{L2} in the locked state S_{L} of the second locking member 3b, frictional engagement between the second locking member 3b and the first member 1 is preventing such displacement, as described above. The second inclined position P_{I2} of the second locking member 3b, established by the spring action from the second spring 4b and the counteraction from the second abutment member 13b are securing this frictional engagement.

If instead a pushing force F_{PUSH} acting on the first member 1 and/or the second member 2, is trying to displace the first member 1 relative to the second member 2 in the longitudinal first direction D_{L1} in the locked state S_{L} of the second locking member 3b, frictional engagement between the second locking member 3b and the first member 1 will depending on the applied pushing force F_{PUSH} counteract the spring force applied by the second spring 4b. It is thus in this way possible to bias the second locking member 3b away from the second inclined position P_{I2}, where theoretically the first member 1 could be displaced relative to the second member 2 in the longitudinal first direction D_{L1}. However, the first locking member 3a is used for preventing such displacement.

The linear locking mechanism M may further comprise an unlocking mechanism U that is configured for arranging the first locking arrangement L1 into an unlocked state Su. In figure 5a, the first locking member 3a is arranged in an unlocked state Su, and the second locking member 3b is arranged in an unlocked state Su. The unlocking mechanism U is enabling linear movement of the first member 1 relative to the second member 2 by releasing the first locking force F₁ and the second locking force F₂. The unlocking function is enabled by the unlocking mechanism U, which in the illustrated embodiment is pushing the first locking member 3a away from the first inclined position P_{I1} and the second locking member 3b away from the second inclined position P_{I2} respectively, as understood from figures 5a-b. The pushing actions from the unlocking mechanism U is tilting the locking members away from their respective inclined positions for reducing the frictional engagement between the locking members and the first member 1. The unlocking mechanism U may be arranged with actuated pushing rods or similar arrangements for displacing the first locking member 3a and the second locking member 3b from the locked states S_{L} to the unlocked states Su. By stopping the action from the unlocking mechanism U, the first locking member 3a and the second locking member 3b are returned to the locked states S_{L} from the unlocked states Su. If suitable, the first locking member 3a and the second locking member 3b may be individually locked and unlocked by the unlocking mechanism U. In other non-illustrated embodiment, the unlocking mechanism may have other suitable configurations.

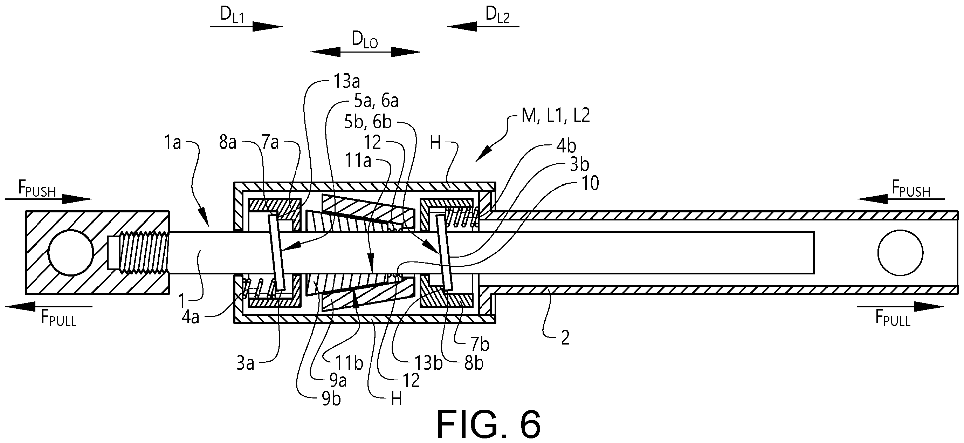

Figures 6, 7a-c, and 8a-b schematically show a second embodiment of a linear locking mechanism M for stepless locking of an elongated first member 1 to a second member 2. In this embodiment, the linear locking mechanism M comprises the first locking arrangement L1 as described in the embodiment above, and further a second locking arrangement L2. With this configuration, the linear locking mechanism M has a two-part locking arrangement where the first locking arrangement L1 is providing an initial locking force and the second locking arrangement L2 is providing a high-load locking force. This embodiment of the linear locking mechanism M is suitable in constructions when there is a need for higher locking forces compared to the embodiment described above with only the first locking arrangement L1. The first locking arrangement L1 and the second locking arrangement L2 are cooperating for establishing the locking forces preventing movement of the first member 1 relative to the second member 2. The first locking arrangement L1 and the second locking arrangement L2 are arranged in a housing structure H connected to the second member 2.

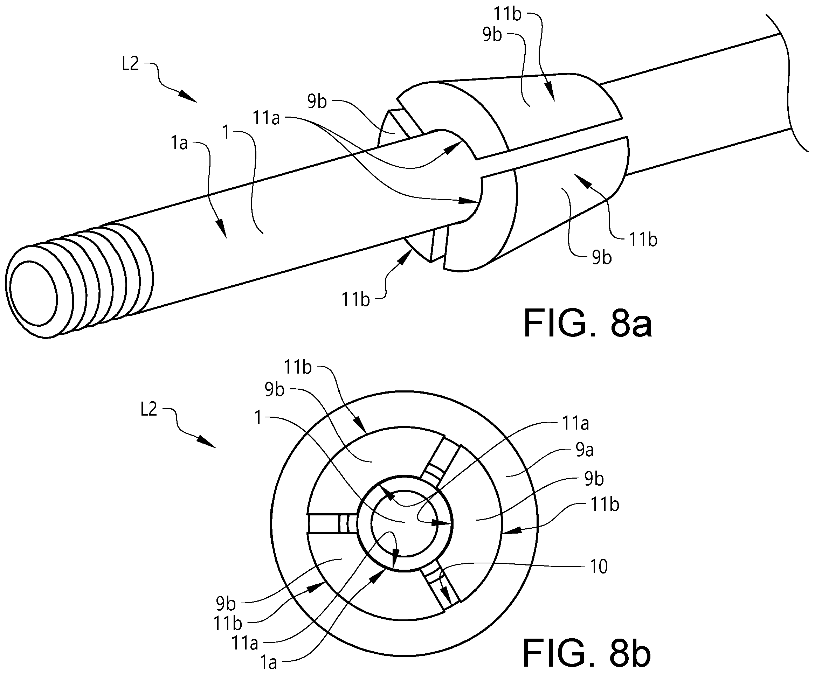

The second locking arrangement L2 comprises an outer locking member 9a arranged around the first member 1, and one or more inner locking members 9b arranged at least partly inside the outer locking member 9a and in connection to the first member 1, as shown in figures 6, 7a-c, and 8a-b. In the shown embodiment, the outer locking member 9a and the one or more inner locking members 9b are arranged longitudinally between the first locking member 3a and the second locking member 3b, as understood from the figures. The one or more inner locking members 9b are movably arranged relative to the first member 1 and the outer locking member 9a in the longitudinal direction D_{LO}. The one or more inner locking members 9b are configured for applying a third locking force F₃ onto the first member 1 preventing movement of the first member 1 relative to the second member 2 in the longitudinal first direction D_{L1} and in the longitudinal second direction D_{L2}. The third locking force F₃ is applied upon a relative movement of the outer locking member 9a in the longitudinal direction D_{LO} towards the one or more inner locking members 9b, and/or upon a relative movement of the one or more inner locking members 9b in the longitudinal direction D_{LO} towards the outer locking member 9a. In the embodiment illustrated in figures 8a-b, three inner locking members 9b are used for applying the third locking force F₃. It should however be understood that the second locking arrangement L2 may have any suitable number of inner locking members 9b.

The one or more inner locking members 9b are configured for applying the third locking force F₃ onto the first member 1 for preventing movement of the first member 1 relative to the second member 2 in the longitudinal first direction D_{L1} and in the longitudinal second direction D_{L2}, upon a relative movement of the outer locking member 9a in the longitudinal direction D_{LO} towards the one or more inner locking members 9b, and/or upon a relative movement of the one or more inner locking members 9b in the longitudinal direction D_{LO} towards the outer locking member 9a.

Upon a relative movement of the outer locking member 9a in the longitudinal direction D_{LO} towards the one or more inner locking members 9b, and/or upon a relative movement of the one or more inner locking members 9b in the longitudinal direction D_{LO} towards the outer locking member 9a, the one or more inner locking members 9b are pushed towards the outer surface 1a of the first member 1 for applying the third locking force F₃ by means of frictional engagement between the one or more inner locking members 9b and the outer surface 1a of the first member 1. The relative movement of the outer locking member 9a and the one or more inner locking members 9b in the longitudinal direction D_{LO} towards each other is establishing a radial displacement of each of the one or more inner locking members 9b towards the outer surface 1a of the first member 1. This radial displacement is pushing each of the one or more inner locking members 9b towards the first surface 1a for applying the third locking force F₃ onto the first member 1.

In the embodiment shown in figures 6, 7a-c, and 8a-b, the outer locking member 9a has a frustoconical inner surface 10. The one or more inner locking members 9b each has an inner surface 11a arranged in contact with the outer surface 1a of the first member 1. The one or more inner locking members 9b each has an inclined outer surface 11b arranged in contact with the inner surface 10 of the outer locking member 9a. In this way, the inner surfaces 11a of the one or more inner locking members 9b are configured for applying the third locking force F₃ by means of frictional engagement between the inner surfaces 11a of the one or more inner locking members 9b and the outer surface 1a of the first member 1. The interaction between the frustoconical inner surface 10 of the outer locking member 9a and the inclined outer surfaces 11b of the one or more inner locking members 9b is pushing the one or more inner locking members 9b towards the first member 1 upon the relative movement of the outer locking member 9a and the one or more inner locking members 9b towards each other in the longitudinal direction D_{LO}.

In the embodiment illustrated in figures 6, 7a-c, and 8a-b, the first support structure 7a is movably arranged relative to the first member 1 in the longitudinal direction D_{LO}, and the second support structure 7b is movably arranged relative to the first member 1 in the longitudinal direction D_{LO}. Thus, in this embodiment, the first support structure 7a and the second support structure 7b are not attached to the second member 2, and in this way, the first support structure 7a and the second support structure 7b may be moved in the longitudinal direction D_{LO} relative to both the first member 1 and the second member 2. The movements of the first support structure 7a and the second support structure 7b in the longitudinal direction D_{LO} is used for displacing the outer locking member 9a and the one or more inner locking members 9b towards each other in the longitudinal direction D_{LO}, as will be further described below.

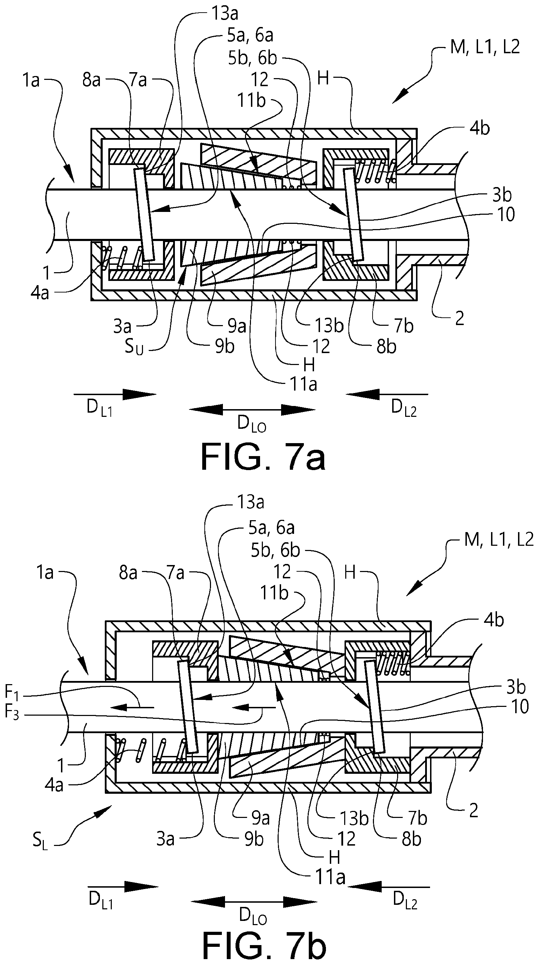

In figure 7a, the first locking member 3a and the second locking member 3b are arranged in the locked states S_{L}, and the second locking arrangement L2 is arranged in an unlocked state Su. In the unlocked state Su of the second locking arrangement L2, the first member 1 is free to move relative to the outer locking member 9a and the one or more inner locking members 9b in the longitudinal direction D_{LO}.

When a pushing force F_{PUSH} acting on the first member 1 and/or the second member 2, is trying to displace the first member 1 relative to the second member 2 in the longitudinal first direction D_{L1}, as schematically indicated in figure 6, the locking engagement between the first locking member 3a and the first member 1 is established, as described in the embodiment above. In this way, the first locking force F₁ applied onto the first member 1 by the first locking member 3a, is displacing the first support structure 7a a small distance in the longitudinal first direction D_{L1} from the position shown in figure 7a to the position shown in figure 7b. Upon application of the first locking force F₁ onto the first member 1, the first locking member 3a is pushing the first support structure 7a and the one or more inner locking members 9b in the longitudinal first direction D_{L1} towards the outer locking member 9a for applying the third locking force F₃ onto the first member 1. When the third locking force F₃ is applied, the second locking arrangement L2 is arranged in a locked state S_{L}. In this way, the first member 1 is locked by the second locking arrangement L2 when subjected to axial pressure in the longitudinal first direction D_{L1} from the first locking member 3a via the first support structure 7a. The first locking member 3a and the second locking arrangement L2 are in this way cooperating for preventing displacement of the first member 1 relative to the second member 2 in the longitudinal first direction D_{L1}. It should be understood that the first member 1 is only displaced a small distance in the longitudinal first direction D_{L1} during the locking operation, since further movement is restricted by the housing structure H.

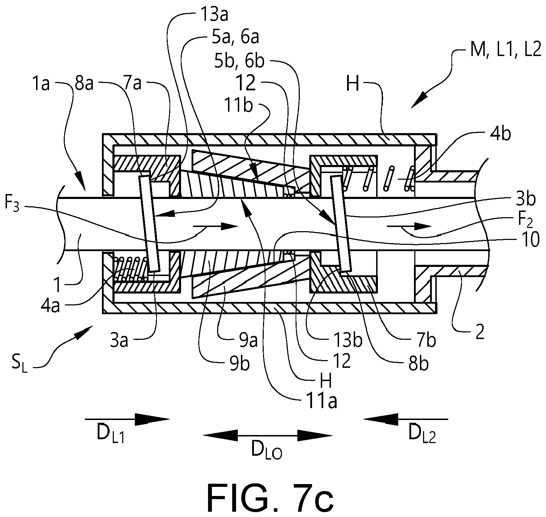

When a pulling force F_{PULL} acting on the first member 1 and/or the second member 2, is trying to displace the first member 1 relative to the second member 2 in the longitudinal second direction D_{L2}, as schematically indicated in figure 6, the locking engagement between the second locking member 3b and the first member 1 is established, as described in the embodiment above. In this way, the second locking force F₂ applied onto the first member 1 by the second locking member 3b, is displacing the second support structure 7b a small distance in the longitudinal second direction D_{L2} from the position shown in figure 7a to the position shown in figure 7c. Upon application of the second locking force F₂ onto the first member 1, the second locking member 3b is pushing the second support structure 7b and the outer locking member 9a in the longitudinal second direction D_{L2} towards the one or more inner locking members 9b for applying the third locking force F₃ onto the first member 1. When the third locking force F₃ is applied, the second locking arrangement L2 is arranged in a locked state S_{L}. In this way, the first member 1 is locked by the second locking arrangement L2 when subjected to axial pressure in the longitudinal second direction D_{L2} from the second locking member 3b via the second support structure 7b. The second locking member 3b and the second locking arrangement L2 are in this way cooperating for preventing displacement of the first member 1 relative to the second member 2 in the longitudinal second direction D_{L2}. It should be understood that the first member 1 is only displaced a small distance in the longitudinal second direction D_{L2} during the locking operation, since further movement is restricted by the housing structure H.

The second locking arrangement L2 comprises a third spring 12 arranged between the outer locking member 9a and the one or more inner locking members 9b, as shown in figures 7a-c. In this way, the outer locking member 9a and the one or more inner locking members 9b are biased away from each other in the longitudinal direction D_{LO}, by means of spring action from the third spring 12, into the unlocked state Su.

The linear locking mechanism M, may in this embodiment further comprise an unlocking mechanism U. The unlocking mechanism U is used for unlocking the first locking arrangement L1 and the second locking arrangement L2 for enabling linear movement of first member 1 relative to the second member 2 by releasing the first locking force F₁, the second locking force F₂, and the third locking force F₃. The unlocking mechanism U may have the design and configuration described in connection to the embodiment above. By the arranging the first locking member 3a and the second unlocking member 3b in the unlocked states Su, the third spring 12 is pushing the outer locking member 9a and the one or more inner locking members 9b away from each other in the longitudinal direction D_{LO} by means of spring action into the unlocked state Su.

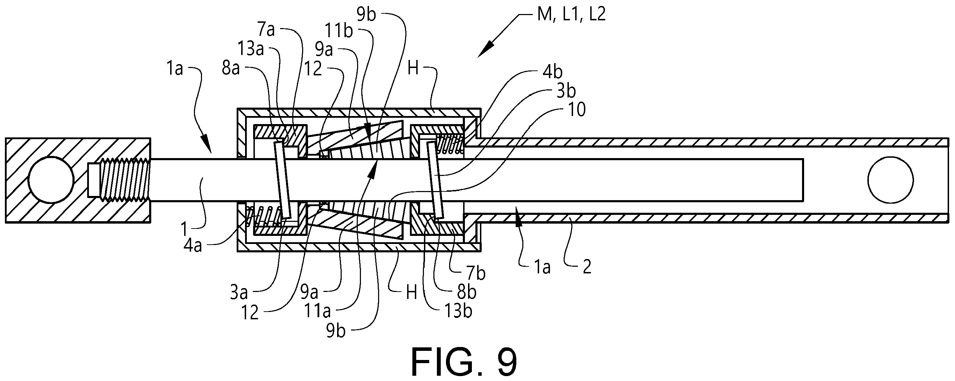

Figure 9 schematically shows a third embodiment of a linear locking mechanism M for stepless locking of an elongated first member 1 to a second member 2. In this embodiment, the linear locking mechanism M comprises the first locking arrangement L1 and further a second locking arrangement L2 in the same way and with the same function as described in the embodiment above in connection to figures 6, 7a-c, and 8a-b. However, in the embodiment shown in figure 9, the positions of the outer locking member 9a and the one or more inner locking members 9b are changed. In this embodiment, the outer locking member 9a is arranged to engage the first support structure 7a, and the one or more inner locking members 9b are arranged to engage the second support structure 7b.

In the embodiment shown in figure 9, the first locking member 3a is pushing the first support structure 7a and the outer locking member 9a in the longitudinal first direction D_{L1} towards the one or more inner locking members 9b for applying the third locking force F₃ onto the first member 1, upon application of the first locking force F₁ onto the first member 1. The second locking member 3b is pushing the second support structure 7b and the one or more inner locking members 9b in the longitudinal second direction D_{L2} towards the outer locking member 9a for applying the third locking force F₃ onto the first member 1, upon application of the second locking force F₂ onto the first member 1.

It will be appreciated that the above description is merely exemplary in nature and is not intended to limit the present disclosure, its application or uses. While specific examples have been described in the specification and illustrated in the drawings, it will be understood by those of ordinary skill in the art that various changes may be made and equivalents may be substituted for elements thereof without departing from the scope of the present disclosure as defined in the claims. Furthermore, modifications may be made to adapt a particular situation or material to the teachings of the present disclosure without departing from the essential scope thereof. Therefore, it is intended that the present disclosure not be limited to the particular examples illustrated by the drawings and described in the specification as the best mode presently contemplated for carrying out the teachings of the present disclosure, but that the scope of the present disclosure will include any embodiments falling within the foregoing description and the appended claims. Reference signs mentioned in the claims should not be seen as limiting the extent of the matter protected by the claims, and their sole function is to make claims easier to understand.

### REFERENCE SIGNS

- 1:: First member
- 1a:: Outer surface
- 2:: Second member
- 3a:: First locking member
- 3b:: Second locking member
- 4a:: First spring
- 4b:: Second spring
- 5a:: First opening
- 5b:: Second opening
- 6a:: First inner edge surface
- 6a_{L}:: First lower section
- 6au:: First upper section
- 6b:: Second inner edge surface
- 6a_{L}:: Second lower section
- 6au:: Second upper section
- 7a:: First support structure
- 7b:: Second support structure
- 8a:: First outer edge
- 8b:: Second outer edge
- 9a:: Outer locking member
- 9b:: Inner locking member
- 10:: Inner surface, Outer locking member
- 11a:: Inner surface. Inner locking member
- 11b:: Outer surface, Inner locking member
- 12:: Third spring
- 13a:: First abutment member
- 13b:: Second abutment member

- D_{L1}:: Longitudinal first direction
- D_{L2}:: Longitudinal second direction
- D_{LO}:: Longitudinal direction
- F₁:: First locking force
- F₂:: Second locking force
- F_{PULL}:: Pulling force
- F_{PUSH}:: Pushing force
- H:: Housing structure
- L1:: First locking arrangement
- L2:: Second locking arrangement
- M:: Linear locking mechanism
- P_{I1}:: First inclined position
- P_{I2}:: Second inclined position
- R:: Vehicle seat rail structure
- S:: Vehicle seat
- S_{L}:: Locked state
- Su:: Unlocked state
- U:: Unlocking mechanism
- V:: Vehicle

## Claims

1. A linear locking mechanism (M) for stepless locking of an elongated first member (1) having an extension in a longitudinal direction (D_{LO}) to a second member (2), wherein the first member (1) is releasably connected to the second member (2) and linearly movable relative to the second member (2) in a longitudinal first direction (D_{L1}) and a longitudinal second direction (D_{L2}) opposite the longitudinal first direction (D_{L1}),
wherein the linear locking mechanism (M) comprises a first locking arrangement (L1), wherein the first locking arrangement (L1) comprises a first locking member (3a) and a second locking member (3b) arranged around an outer surface (1a) of the first member (1) and in connection to the second member (2), wherein the first locking member (3a) is configured for applying a first locking force (F₁) onto the first member (1) preventing movement of the first member (1) relative to the second member (2) in the longitudinal first direction (D_{L1}), and wherein the second locking member (3b) is configured for applying a second locking force (F₂) onto the first member (1) preventing movement of the first member (1) relative to the second member (2) in the longitudinal second direction (D_{L2}),
wherein the first locking member (3a) is biased by a first spring (4a) in the longitudinal first direction (D_{L1}) into a first inclined position (P_{I1}) relative to the extension of the first member (1) in the longitudinal direction (D_{LO}) for establishing the first locking force (F₁), and wherein the second locking member (3b) is biased by a second spring (4b) in the longitudinal second direction (D_{L2}) into a second inclined position (P_{I2}) relative to the extension of the first member (1) in the longitudinal direction (D_{LO}) for establishing the second locking force (F₂).

2. The linear locking mechanism (M) according to claim 1,
wherein the first locking member (3a) comprises a first opening (5a) defined by a first inner edge surface (6a) through which the first member (1) is extending, wherein the first inner edge surface (6a) is configured for applying the first locking force (F₁) upon frictional engagement between the first inner edge surface (6a) and the outer surface (1a) of the first member (1),
and wherein the second locking member (3b) comprises a second opening (5b) defined by a second inner edge surface (6b) through which the first member (1) is extending, wherein the second inner edge surface (6b) is configured for applying the second locking force (F₂) upon frictional engagement between the second inner edge surface (6b) and the outer surface (1a) of the first member (1).

3. The linear locking mechanism (M) according to claim 1 or 2,
wherein the linear locking mechanism (M) comprises a first support structure (7a) arranged around the first member (1), wherein the first support structure (7a) is arranged in contact with the first locking member (3a); and wherein the linear locking mechanism (M) comprises a second support structure (7b) arranged around the first member (1), wherein the second support structure (7b) is arranged in contact with the second locking member (3b).

4. The linear locking mechanism (M) according to claim 3,
wherein the first support structure (7a) comprises a first abutment member (13a) arranged in contact with a first outer edge (8a) of the first locking member (3a), wherein the first abutment member (13a) is configured for positioning the first locking member (3a) into the first inclined position (P_{I1}) relative to the extension of the first member (1) in the longitudinal direction (D_{LO}) when biased by the first spring (4a) in the longitudinal first direction (D_{L1}),
wherein the second support structure (7b) comprises a second abutment member (13b) arranged in contact with a second outer edge (8b) of the second locking member (3b), wherein the second abutment member (13b) is configured for positioning the second locking member (3b) into the second inclined position (P_{I2}) relative to the extension of the first member (1) in the longitudinal direction (D_{LO}) when biased by the second spring (4b) in the longitudinal second direction (D_{L2}).

5. The linear locking mechanism (M) according to any preceding claim,
wherein the linear locking mechanism (M) further comprises a second locking arrangement (L2), wherein the second locking arrangement (L2) comprises an outer locking member (9a) arranged around the first member (1), and one or more inner locking members (9b) arranged at least partly inside the outer locking member (9a) and in connection to the first member (1), wherein the one or more inner locking members (9b) are movably arranged relative to the first member (1) and the outer locking member (9a) in the longitudinal direction (D_{LO}),
wherein the one or more inner locking members (9b) are configured for applying a third locking force (F₃) onto the first member (1) preventing movement of the first member (1) relative to the second member (2) in the longitudinal first direction (D_{L1}) and in the longitudinal second direction (D_{L2}).

6. The linear locking mechanism (M) according to claim 5,
wherein the one or more inner locking members (9b) are configured for applying the third locking force (F₃) onto the first member (1) preventing movement of the first member (1) relative to the second member (2) in the longitudinal first direction (D_{L1}) and in the longitudinal second direction (D_{L2}), upon a relative movement of the outer locking member (9a) in the longitudinal direction (D_{LO}) towards the one or more inner locking members (9b), and/or upon a relative movement of the one or more inner locking members (9b) in the longitudinal direction (D_{LO}) towards the outer locking member (9a).

7. The linear locking mechanism (M) according to claim 5 or 6,
wherein upon a relative movement of the outer locking member (9a) in the longitudinal direction (D_{LO}) towards the one or more inner locking members (9b), and/or upon a relative movement of the one or more inner locking members (9b) in the longitudinal direction (D_{LO}) towards the outer locking member (9a), the one or more inner locking members (9b) are configured for being pushed towards the outer surface (1a) of the first member (1) for applying the third locking force (F₃) by means of frictional engagement between the one or more inner locking members (9b) and the outer surface (1a) of the first member (1).

8. The linear locking mechanism (M) according to any of claims 5 to 7,
wherein the outer locking member (9a) has a frustoconical inner surface (10), and wherein the one or more inner locking members (9b) each has an inner surface (11a) arranged in contact with the outer surface (1a) of the first member (1) and an inclined outer surface (11b) arranged in contact with the inner surface (10) of the outer locking member (9a), wherein the inner surfaces (11a) of the one or more inner locking members (9b) are configured for applying the third locking force (F₃) by means of frictional engagement between the inner surfaces (11a) of the one or more inner locking members (9b) and the outer surface (1a) of the first member (1).

9. The linear locking mechanism (M) according to claim 3 or 4 and any of claims 5 to 8,
wherein the first support structure (7a) is movably arranged relative to the first member (1), wherein upon application of the first locking force (F₁) onto the first member (1) the first locking member (3a) is configured for pushing the first support structure (7a) and the one or more inner locking members (9b) in the longitudinal first direction (D_{L1}) towards the outer locking member (9a) for applying the third locking force (F₃) onto the first member (1), or wherein upon application of the first locking force (F₁) onto the first member (1) the first locking member (3a) is configured for pushing the first support structure (7a) and the outer locking member (9a) in the longitudinal first direction (D_{L1}) towards the one or more inner locking members (9b) for applying the third locking force (F₃) onto the first member (1).

10. The linear locking mechanism (M) according to claim 3 or 4 and any of claims 5 to 9,
wherein the second support structure (7b) is movably arranged relative to the first member (1), wherein upon application of the second locking force (F₂) onto the first member (1) the second locking member (3b) is configured for pushing the second support structure (7b) and the outer locking member (9a) in the longitudinal second direction (D_{L2}) towards the one or more inner locking members (9b) for applying the third locking force (F₃) onto the first member (1), or wherein upon application of the second locking force (F₂) onto the first member (1) the second locking member (3b) is configured for pushing the second support structure (7b) and the one or more inner locking members (9b) in the longitudinal second direction (D_{L2}) towards the outer locking member (9a) for applying the third locking force (F₃) onto the first member (1).

11. The linear locking mechanism (M) according to any of claims 5 to 10,
wherein the second locking arrangement (L2) comprises a third spring (12) arranged between the outer locking member (9a) and the one or more inner locking members (9b), wherein the outer locking member (9a) and the one or more inner locking members (9b) are configured for being biased away from each other in the longitudinal direction (D_{LO}) by means of the third spring (12).

12. The linear locking mechanism (M) according to any preceding claim,
wherein the first locking arrangement (L1) is arranged in a housing structure (H) connected to the second member (2), and/or wherein the first locking arrangement (L1) and the second locking arrangement (L2) are arranged in a housing structure (H) connected to the second member (2).

13. The linear locking mechanism (M) according to any preceding claim,
wherein the linear locking mechanism further comprises an unlocking mechanism (U), wherein the unlocking mechanism (U) is configured for unlocking the first locking arrangement (L1) enabling linear movement of the first member (1) relative to the second member (2) by releasing the first locking force (F₁) and the second locking force (F₂), or wherein the unlocking mechanism (U) is configured for unlocking the first locking arrangement (L1) and the second locking arrangement (L2) enabling linear movement of first member (1) relative to the second member (2) by releasing the first locking force (F₁), the second locking force (F₂), and the third locking force (F₃).

14. A vehicle component comprising a linear locking mechanism (M) according to any of claims 1 to 13.

15. The vehicle component according to claim 14,
wherein the vehicle component is a vehicle seat rail structure (R), or wherein the vehicle component is a vehicle seat structure (S).

16. A method for operating a linear locking mechanism (M) according to any of claims 1 to 13, wherein the method comprises the steps:
applying a first locking force (F₁) onto the first member (1) by means of the first locking member (3a) for preventing movement of the first member (1) relative to the second member (2) in the longitudinal first direction (D_{L1}), wherein the first locking member (3a) is biased by a first spring (4a) in the longitudinal first direction (D_{L1}) into a first inclined position (P_{I1}) relative to the extension of the first member (1) in the longitudinal direction (D_{LO}) for establishing the first locking force (F1);
applying a second locking force (F₂) onto the first member (1) by means of the second locking member (3b) for preventing movement of the first member (1) relative to the second member (2) in the longitudinal second direction (D_{L2}), wherein the second locking member (3b) is biased by a second spring (4b) in the longitudinal second direction (D_{L2}) into a second inclined position (P_{I2}) relative to the extension of the first member (1) in the longitudinal direction (D_{LO}) for establishing the second locking force (F₂).
